Europäisches Patentamt

European Patent Office

Office européen des brevets

(19)

(11) Veröffentlichungsnummer: **0 209 927**
**B1**

(12) **EUROPÄISCHE PATENTSCHRIFT**

(45) Veröffentlichungstag der Patentschrift:
30.08.89

(21) Anmeldenummer: **86201056.8**

(22) Anmeldetag: **18.06.86**

(51) Int. Cl.⁴: **C 03 B 20/00**, C 03 B 8/02,
C 03 B 37/012, H 01 J 5/04

(54) Verfahren zur Herstellung von Glaskörpern.

(30) Priorität: 21.06.85 DE 3522194

(43) Veröffentlichungstag der Anmeldung:
28.01.87 Patentblatt 87/05

(45) Bekanntmachung des Hinweises auf die Patenterteilung: 30.08.89 Patentblatt 89/35

(84) Benannte Vertragsstaaten:
DE FR GB IT SE

(56) Entgegenhaltungen:
EP–A– 0 140 651
GB–A– 2 113 200
US–A– 3 775 077

(73) Patentinhaber: Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB IT SE

(72) Erfinder: Clasen, Rolf, Dr. Dipl.-Phys.
Schlossparkstrasse 36
D-5100 Aachen (DE)
Erfinder: Opitz, Joachim, Dr. Dipl.-Chem.
Kirchrather Strasse 46
D-5100 Aachen (DE)

(74) Vertreter: Nehmzow-David, Fritzi-Maria et al
Philips Patentverwaltung GmbH Wendenstrasse 35
Postfach 10 51 49
D-2000 Hamburg 1 (DE)

**Beschreibung**

Die Erfindung betrifft ein Verfahren zur Herstellung von Glaskörpern, bei dem aus dem Ausgangsmaterial für den Glaskörper in Form von monodispersen $SiO_2$-Partikeln (Quarzglaspulver) ein offenporiger Grünkörper geformt, dieser Grünkörper in einem, mit im Grünkörper vorhandenen Verunreinigungen reagierenden, auf eine Temperatur im Bereich von 600 bis 900 °C erhitzten Reinigungsgas einem Reinigungsprozeß unterzogen und anschließend gesintert wird.

Ein derartiges Verfahren ist dem Fachmann geläufig.

Das eingangs genannte Verfahren ist insbesondere geeignet zur Herstellung von Vorformen für optische Wellenleiter aus Quarzglas.

Optische Wellenleiter werden bei einer Vielzahl von Anwendungszwecken eingesetzt, so für Lichtübertragungseinrichtungen kurzer Distanz oder für Lichtübertragungssysteme großer Distanz, wie bei optischen Kommunikationssystemen, und bestehen überwiegend aus einem Glas mit hohem Siliciumdioxidgehalt (das erforderlichenfalls ein Dotierungsmittel zur Einstellung des Brechungsindex des Glases enthält).

Gläser, die für optische Wellenleiter geeignet sind, sind ebenfalls mit Vorteil verwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

Zur Herstellung von Vorformen für optische Wellenleiter kann z. B. ausgegangen werden von hochdispersen kolloidalen $SiO_2$-Suspensionen, die zu einem Grünkörper verformt werden. So ist z. B. aus DE-A-30 01 792 ein Verfahren bekannt, bei dem über eine Sol-Gel-Umwandlung eine Siliciumalkoholat (oder Siliciumalkoxid)/Wasser/Alkohol-Lösung in einem Behälter definierter Form zu einem Gel hydrolysiert wird, das Gel langsam getrocknet und das trockene Gel unterhalb der Schmelztemperatur des trockenen Gels gesintert wird. Mit einem solchen Verfahren ist zwar eine Formgebung des Grünkörpers relativ einfach möglich, die Trocknung des Gels zu einem monolithischen Grünkörper, die auf jeden Fall so erfolgen muß, daß keine Risse im Grünkörper entstehen, bereitet jedoch erhebliche Schwierigkeiten. Die Trocknung muß entweder außerordentlich langsam erfolgen und ist damit sehr zeitaufwendig oder sie erfordert einen großen apparativen Aufwand (z. B. Trocknung unter überkritischen Bedingungen im Autoklaven). Ebenfalls schwierig ist die Reinigung des trockenen Grünkörpers in einer erhitzten, mit vorliegenden Verunreinigungen reagierenden Gasatmosphäre wegen der sehr großen Oberflächen (typische Größe 1 000 m²/g) und den damit sehr kleinen Zwischenräumen zwischen den äußerst feinen Teilchen. Beim Sintern von auf diese Weise hergestellten Grünkörpern wird außerdem häufig eine Nadelstichbildung aufgrund von an der Oberfläche adsorbierten und beim Sintern eingeschlossenen Gasmolekülen beobachtet. Ein weiterer Nachteil ist, daß sich nur Grünkörper mit geringen relativen Grünkörperdichten in der Größenordnung von $\approx$ 10 % der Dichte kompakten Quarzglases herstellen lassen.

Aus GB-A-682 580 ist z. B. ein Zentrifugierverfahren zur Herstellung von porösen Glasrohren, z. B. als Filter für Laborzwecke, bekannt, bei dem Suspensionen von Glaspulver in einem, ein Absetzen der Feststoffpartikel verhindernden Bindemittel, unter Zusatz von Benetzungsmitteln und Mitteln, die ein Aufschäumen der Suspension verhindern, in eine Zentrifuge eingebracht werden und dort auf der Innenwand einen lockeren Verbund abgeschiedener Feststoffpartikel bilden. Bei einem Zentrifugierprozeß zur Formung von Grünkörpern zur Herstellung von Quarzglaskörpern wirkt sich das breite Korngrößenspektrum der hochdispersen $SiO_2$-Pulver, wie sie im Handel erhältlich sind, nachteilig aus wegen der sehr unterschiedlichen Absetzgeschwindigkeit der einzelnen Partikel und der damit verbundenen Inhomogenität des erhaltenen Grünkörpers.

Quarzglaspulver als Ausgangsmaterial für die Herstellung von Quarzglaskörpern, z. B. optischen Wellenleitern, können z. B. auch in Form von Strangpreßmassen weiterverarbeitet werden. So ist aus GB-A-10 10 702 z. B. ein Verfahren bekannt, bei welchem pulverförmiges reines oder nahezu reines $SiO_2$ mit einem flüssigen Bindemittel und gegebenenfalls einem weiteren, den Strangpreßprozeß begünstigenden Gleitmittel zu einer Strangpreßmasse verarbeitet und über einen Strangpreßprozeß verformt wird.

Beim Verarbeiten von hochdispersen Ausgangspulvern mit Korndurchmessern < 1 µm, wie sie für die Herstellung von Quarzglaskörpern (insbesondere auch für Vorformen von optischen Wellenleitern) eingesetzt werden, entstehen Probleme beim Mischen bzw. Kneten, besonders dann, wenn die Ausgangsmassen einen hohen Anteil an hochdisperser Phase enthalten, da dann eine wesentlich größere Anzahl von Teilchen gleichmäßig verteilt und eine entsprechend große Oberfläche mit den Zusatzstoffen (Binde- und Gleitmittel) gleichmäßig bedeckt werden muß. So liegen beispielsweise die typischen Misch- und Knetzeiten für eine Ausgangsmasse aus hochdispersen Quarzglasteilchen (10 bis 100 nm Teilchendurchmesser) mit 60 Gew.% $SiO_2$ und 36 Gew.% Wasser (Rest Zusatzstoffe) bei 1 bis 3 h.

Gegenüber dem nach dem Sol-Gel-Verfahren hergestellten Ausgangsmaterial für die Herstellung von Quarzglaskörpern hat die Verarbeitung von pulverförmigen $SiO_2$-Partikeln gewisse Vorteile. Nachteilig ist jedoch bei den kommerziell erhältlichen $SiO_2$-Pulvern, daß sie nur in hochdisperser Form, also in einer breiten Korngrößenverteilung, geliefert werden.

Bei Verwendung monodisperser $SiO_2$-Pulver können die oben dargestellten Schwierigkeiten vermindert werden. Die Herstellung von mondispersen Quarzglaspulvern ist bekannt (J. Colloid Interface Sci. 26 (1968), Seiten 62 bis 69). Diese bekannte Synthese von $SiO_2$-Pulvern basiert auf der ammonikalischen Hydrolyse von Alkoxysilanen in alkoholischer Lösung.

Es hat sich nun aber gezeigt, daß die auf die bekannte Weise erhaltenen kugelförmigen $SiO_2$-Partikel in der Regel in sich porös sind. Bei der Verarbeitung derartiger poröser $SiO_2$-Partikel treten die gleichen Schwierigkeiten auf, wie z. B. bei $SiO_2$-Ausgangsmaterial, das nach dem Sol-Gel-Verfahren hergestellt wurde : die aus porösen $SiO_2$-Partikeln geformten Grünkörper sind in einer erhitzten, mit vorliegenden Verunreinigungen reagierenden Gasatmosphäre wegen ihrer sehr großen spezifischen Oberflächen (typische Größe 200-300 m²/g) nur sehr schwierig zu reinigen. Beim Sintern von auf diese Weise hergestellten Grünkörpern wird außerdem auch häufig eine Nadelstichbildung aufgrund von an der Oberfläche adsorbierten und beim Sintern eingeschlossenen Gasmolekülen beobachtet.

Der Erfindung liegt die Aufgabe zugrunde, ein Verfahren zur Herstellung von hochreinen Glaskörpern zu schaffen, mit dem ein Grünkörper erhalten wird, der porös genug ist, daß er in einem Reinigungsschritt in einer mit vorliegenden Verunreinigungen reagierenden erhitzten Gasatmosphäre gut gereinigt werden kann, der jedoch eine so hohe Verdichtung aufweist, daß der anschließende Sinterschritt ohne zusätzliche Verdichtungsmaßnahmen des gereinigten Grünkörpers erfolgen kann und der eine ausreichend hohe mechanische Festigkeit aufweist.

Diese Aufgabe wird erfindungsgemäß dadurch gelöst, daß ein zweistufiger Erhitzungs-Reinigungsschritt angewendet wird, derart, daß in der ersten Stufe die $SiO_2$-Partikel erhitzt werden, bis sie dichtgesintert sind, also in sich keine Mikroporen mehr aufweisen, und daß in der zweiten Stufe der aus den dichtgesinterten $SiO_2$-Partikeln geformte offenporige Grünkörper auf an sich bekannte Weise in der Reinigungsgasatmosphäre gereinigt und anschließend gesintert wird.

Nach einer vorteilhaften Weiterbildung des Verfahrens gemäß der Erfindung werden monodisperse $SiO_2$-Partikel durch ammoniakalische Hydrolyse von Alkoxysilanen in alkoholischer Lösung hergestellt. Auf diese Weise können monodisperse Ausgangspulver für die Herstellung von Quarzglaskörpern gewonnen werden.

Werden die auf die angegebene Weise erhaltenen monodispersen $SiO_2$-Pulver nun in einem anschließenden Erhitzungsschritt bei einer Temperatur im Bereich von 600 bis 800 °C in einer inerten Atmosphäre, vorzugsweise Vakuum oder Schutzgasatmosphäre (insbesondere Heliumatmosphäre) dichtgesintert, ergibt sich der Vorteil, daß die spezifische Oberfläche der $SiO_2$-Partikel drastisch verringert wird, so daß solche Pulver z. B. besser für Strangpreßmassen geeignet sind, da die hier eingesetzten Binde- und Gleitmittel nur eine wesentlich kleinere Partikeloberfläche gleichmäßig zu bedecken brauchen, es treten bei Zentrifugierprozessen, bei denen die erfindungsgemäß hergestellten $SiO_2$-Pulver verwendet werden, nicht die bei hochdispersen Pulvern unterschiedlichen Abscheidungsgeschwindigkeiten der Partikel sehr abweichender Korngröße auf, was zu Inhomogenitäten des zentrifugierten Grünkörpers führen würde und auch der Reinigungsschritt vor der Sinterung des Grünkörpers zu einem monolithischen Quarzglaskörper erfährt Vorteile bei Verwendung der erfindungsgemäß hergestellten monodispersen $SiO_2$-Pulver, denn auf der verringerten Oberfläche der den porösen Grünkörper bildenden $SiO_2$-Partikel wird nur eine geringe Menge des für den Reinigungsprozeß unter anderem verwendeten Chlorgases adsorbiert, so daß es nicht mehr zu Reboileffekten beim anschließenden Sinterschritt kommen kann. Ein weiterer Vorteil ist, daß die Wasserdiffusion in den einzelnen, nach dem erfindungsgemäßen Verfahren hergestellten $SiO_2$-Partikeln so groß ist, daß die OH-Konzentration auf nur einige ppb gesenkt werden kann.

Dieser Umstand ist wichtig für die spätere Verwendung der aus den $SiO_2$-Pulvern hergestellten Quarzglaskörper : Gläser für optische Wellenleiter, aber auch für Lampenkolben für Halogen- oder Gasentladungslampen müssen nahezu wasserfrei sein und einen hohen Siliciumdioxidgehalt aufweisen. Ein weiterer Vorteil ist, daß auch der Reinigungsprozeß in einem mit im Grünkörper vorhandenen Verunreinigungen reagierenden, erhitzten Reinigungsgas aufgrund der verringerten spezifischen Oberfläche der $SiO_2$-Partikel sehr effizient ist ; es hat sich gezeigt, daß Verunreinigungen an Übergangsmetallen ebenfalls nur im ppb-Bereich in nach dem Verfahren der vorliegenden Erfindung hergestellten Quarzglasformkörpern vorliegen. Durch das Dichtsintern der $SiO_2$-Partikel, also die weitgehende Eliminierung der feinen Porenstruktur in den einzelnen $SiO_2$-Partikeln ergibt sich der weitere Vorteil, daß in einem, mit diesem $SiO_2$-Pulver hergestellten Grünkörper ein homogenes Porenvolumen vorliegt, so daß niedrigere Sintertemperaturen zum Erhalten eines blasen- und schlierenfreien Quarzglaskörpers ausreichen, als wenn ein Grünkörper mit einem sehr inhomogenen Porenvolumen zu einem Quarzglaskörper vergleichbarer Qualität gesintert werden müßte. Dies hat zur Folge, daß im Aufbau einfachere Sinteröfen eingesetzt werden können ; bei Sintertemperaturen bis zu 1 550 °C können Öfen mit einem SiC-Futter eingesetzt werden, bei Sintertemperaturen, die über 1 550 °C liegen, müssen Öfen mit höchsttemperturfestem Futter, z. B. aus $MoSi_2$, eingesetzt werden ; diese Öfen sind teuerer als mit SiC ausgekleidete Öfen. Ein weiterer Vorteil einer möglichst niedrigen Sintertemperatur ist, daß Rekristallisationseffekte vermieden werden ; mit steigender Sintertemperatur nehmen Rekristallisationseffekte auf der Oberfläche des Sinterkörpers zu, die insbesondere dann störend und unerwünscht sind, wenn die Glaskörper als Vorformen für optische Wellenleiter verwendet werden sollen, da die mechanischen Eigenschaften sich stark verschlechtern (Gefahr

der Rißbildung).

Nach dem Verfahren gemäß der vorliegenden Erfindung können monodisperse $SiO_2$-Partikel eines mittleren Teilchendurchmessers von jeweils d = 0,08 bis 0,9 μm mit einer Standardabweichung s = 0,04 bis 0,1 (logarithmische Normalverteilung) mikroporenfrei und mit einer spezifischen Oberfläche von 3 bis 30 m²/g erreicht werden ; demgegenüber hatten die porösen $SiO_2$-Partikel vor dem Sinterschritt eine spezifische Oberfläche in der Größenordnung von 270 m²/g und ein Porenvolumen von 0,16 ml bei Mikroporen eines Durchmessers < 3 nm.

Im folgenden werden Ausführungsbeispiele zur Herstellung monodisperser $SiO_2$-Partikel und hieraus hergestellter Grünkörper, die anschließend zu monolithischen, blasen- und schlierenfreien Quarzglaskörpern gesintert wurden, beschrieben.

Beispiel I

In einem Erlenmeyerkolben werden 41,7 ml einer 14,4 molaren Ammoniaklösung und 500 ml Wasser (destilliert) mit 359 ml absolutem Ethanol gemischt. Dann werden unter Rühren 100 ml einer 3,0 molaren Lösung von destilliertem Tetraethoxysilan in absolutem Ethanol zugegeben. Nach zwei Minuten trübt sich die Reaktionslösung. Die erhaltene Suspension wird zur Vervollständigung der Reaktion noch einige Stunden gerührt und dann weiterverarbeitet. Dazu wird die Suspension im Vakuum stark eingeengt, mit Salzsäure neutralisiert (PH ≈ 5) und zentrifugiert. Der abgeschiedene Feststoff wird zur Reinigung redispergiert und zentrifugiert und anschließend in einem Trockenschrank bei einer Temperatur von 150 °C getrocknet. Die Ausbeute ist quantitativ. Aus elektronenmikroskopischen Aufnahmen war zu erkennen, daß es sich bei dem erhaltenen Pulver um Kugeln mit einem mittleren Teilchendurchmesser d = 0,53 μm handelt. Die Standardabweichung s betrug 0,07 (logarithmische Normalverteilung). Die spezifische Oberfläche wurde zu 270 m²/g und das Porenvolumen zu 0,16 ml bei Mikroporen mit einem Porendurchmesser von < 3 nm ermittelt.

Ein Grünkörper wird in einem Zentrifugierprozeß auf folgende Weise hergestellt : $SiO_2$-Partikel eines mittleren Teilchendurchmessers d = 0,53 μm werden in einer Menge von 200 g in 300 cm³ wässeriger 0,5 %-iger Ammoniaklösung verrührt und 10 min lang unter Ultraschalleinwirkung bei einer Frequenz f = 35 kHz dispergiert. Eine solche Suspension wird in einer großen Laborzentrifuge 15 min bei 10 000 g zentrifugiert, die klare Lösung abgegossen und der sedimentierte Körper über 24 h ansteigend 1 h bei 120 °C getrocknet. Auf diese Weise werden Grünkörper einer Dichte von 51 % der Dichte von Quarzglas mit einem Durchmesser von 25 mm erhalten. Der auf diese Weise hergestellte Grünkörper wird anschließend in einem ersten Prozeßschritt im Vakuum auf ≈ 800 °C erhitzt, wobei sich die Mikroporen der einzelnen $SiO_2$-Partikel schließen. Dieser Grünkörper wird danach in einem zweiten Prozeßschritt in einem Ofen bei 900 °C 2 h gereinigt, wobei ein $O_2$-Gasstrom von 10⁻³ m³/min (bezogen auf Normalbedingungen) und ein $Cl_2$-Gasstrom von 6.10⁻⁵ m³/min (bezogen auf Normalbedingungen) durch den Ofen gespült wurde. Der unter diesen Bedingungen gereinigte Grünkörper wird anschließend bei einer Temperatur von 1 500 °C in einer Heliumatmosphäre mit 2 Vol.% Chlorgaszusatz gesintert, wobei der Grünkörper mit einer Absenkgeschwindigkeit von 3 mm/min durch den Ofen geführt wurde. Es wurde ein transparenter, blasen- und schlierenfreier Glasstab eines Durchmessers von 20 mm mit Verunreinigungen (Übergangsmetalle und Wasser) über den gesamten Querschnitt von < 10 ppb erhalten. Der erhaltene Quarzglaskörper hatte eine Dichte von 2,2 g/cm³ und einen Brechungsindex $n_D$ = 1,4590.

Beispiel II

In einem Reaktionsgefäß aus Glas werden 176,6 ml einer 14,4 molaren Ammoniaklösung mit 3 369 g destilliertem Wasser und 4 664 ml vergälltem Ethanol gemischt. Das vergällte Ethanol enthält 0,1 % Wasser und 4 % Aceton. Unter Rühren werden 1 500 ml einer 3,0 molaren Lösung von destilliertem Tetraethoxysilan in absolutem Ethanol zugegeben, wobei die Konzentration der Reaktionskomponenten 0,45 Mol/l Tetraethoxysilan, 0,24 Mol/l Ammoniak und 21,0 Mol/l Wasser betragen. Nach Abschalten der Rührvorrichtung trübt sich die Reaktionslösung nach etwa 3 min. Zum vollständigen Umsetzen der Reaktionskomponenten wird die erhaltene Suspension noch einige Stunden stehengelassen und anschließend im Vakuum auf etwa 1/5 des ursprünglichen Volumens eingeengt. Die auf diese Weise erhaltene konzentrierte Suspension wird mit flüssigem Stickstoff schockgefroren und in einer Gefriertrocknungsanlage getrocknet, wonach das erhaltene lockere Pulver einem abschließenden Trocknungsschritt bei 150 °C im Vakuum unterzogen wird. Die Ausbeute ist quantitativ. Der anhand von elektronenmikroskopischen Aufnahmen ermittelte mittlere Teilchendurchmesser d beträgt 0,29 μm. Die Standardabweichung der logarithmischen Normalverteilung s beträgt 0,08. Die spezifische Oberfläche wurde zu 282 m²/g und das Porenvolumen zu 0,18 ml (Mikroporen) ermittelt. Von dem so hergestellten, noch mikroporösen Pulver werden 200 g mit 125 g bidestilliertem Wasser und 1,6 g Ammoniumfluorid als ionogenem Zusatzstoff in einem Glasgefäß, das in einem Ultraschallbad steht, verrührt, bis eine homogene Suspension entsteht. Dies wird nach etwa 5-10 Minuten bequem erreicht, ohne daß eine dilatante Phase auftritt, wie sie leicht bei hochdispersen, im Handel erhältlichen pyrogenen Kieselsäuren mit einer breiten Korngrößenverteilung zu beobachten ist.

Die Suspension wird in einen Folienschlauch aus Polyethylenterephthalat mit 24 mm Durchmesser gegossen und dieser gasdicht verschlossen. Nach einigen Stunden ist die Suspension bei einer Temperatur von 30 bis 40 °C so weit vernetzt, daß mit dem Probenkörper formstabil hantiert werden kann. Damit der Probenkörper trocknen kann, wird der Folienschlauch mit heißem, flüssigen Phenol aufgelöst. Danach erfolgt eine langsame Trocknung der Probe über einen Zeitraum von einer Woche.

Bei der Trocknung schrumpft die Probe um 3 %. Die Grünkörperdichte des getrockneten Probenkörpers beträgt 52 % der Dichte kompakten Quarzglasses.

Im nächsten Schritt wird die Probe im Vakuum binnen 4 Stunden auf 800 °C erhitzt und dann 2 Stunden lang bei dieser Temperatur in einer Sauerstoffatmosphäre mit 10 Vol.% Chlorgas gereinigt (Sauerstoffstrom 1 l/min unter Standardbedingungen).

Die so gereinigte Probe wird bei 1 500 °C in einer Heliumatmosphäre mit 2 Vol.% Chlorgaszusatz gesintert, wobei die Probe mit einer Geschwindigkeit von 10 mm/min durch den Sinterofen geführt wird.

Es wurde ein transparenter, blasen- und schlierenfreier Quarzglasstab mit einem Durchmesser von 18,8 mm erhalten. Die Verunreinigungen an Übergangsmetallen und Wasser betrugen weniger als 10 ppb über den gesamten Querschnitt. Der erhaltene Quarzglaskörper hatte eine Dichte von 2,2 g/cm³ und einen Brechungsindex $nD = 1,4590$.

Da bei dem Erhitzungsprozß zur Dichtsinterung der einzelnen $SiO_2$-Partikel nur die Poren ebendieser $SiO_2$-Partikel dichtgesintert werden, ist es auch möglich, die porösen, monodispersen $SiO_2$-Partikel bereits vor dem Formgebungsprozeß zur Herstellung eines Grünkörpers diesem Erhitzungsprozeß zu unterwerfen und die so erhaltenen porenfreien $SiO_2$-Partikel anschließend mittels eines geeigneten Formgebungsprozesses zu homogenen Grünkörpern zu verarbeiten. Für die Herstellung eines Grünkörpers unter Verwendung von monodispersen, dichtgesinterten $SiO_2$-Partikeln wurden ein Zentrifugier- und ein Gießprozeß beschrieben ; es kann jedoch für die Herstellung von Grünkörpern mit gleichem Erfolg jedes andere geeignete Formgebungsverfahren angewendet werden, das mit pulverförmigen $SiO_2$-Ausgangsmaterial arbeitet.

## Patentansprüche

1. Verfahren zur Herstellung von Glaskörpern, bei dem aus dem Ausgangsmaterial für den Glaskörper in Form von monodispersen $SiO_2$-Partikeln (Quarzglaspulver) ein offenporiger Grünkörper geformt, dieser Grünkörper in einem, mit im Grünkörper vorhandenen Verunreinigungen reagierenden, auf eine Temperatur im Bereich von 600 bis 900 °C erhitzten Reinigungsgas einem Reinigungsprozeß unterzogen und anschließend gesintert wird, dadurch gekennzeichnet, daß ein zweistufiger Erhitzungs-Reinigungsschritt angewendet wird, derart, daß in der ersten Stufe die $SiO_2$-Partikel erhitzt werden, bis sie dichtgesintert sind, also in sich keine Mikroporen mehr aufweisen, und daß in der zweiten Stufe der aus den dichtgesinterten $SiO_2$-Partikeln geformte offenporige Grünkörper auf an sich bekannte Weise in der Reinigungsgasatmosphäre gereinigt und anschließend gesintert wird.

2. Verfahren nach Anspruch 1, dadurch gekennzeichnet, daß monodisperse $SiO_2$-Partikel durch ammonikalische Hydrolyse von Alkoxysilanen in alkoholischer Lösung hergestellt werden.

3. Verfahren nach Anspruch 2, dadurch gekennzeichnet, daß die Konzentrationen in der zur Synthese von $SiO_2$-Partikeln angewendeten Lösung wie folgt sind :

Alkoxysilian : 0,01 bis 0,6 Mol/l
Ammoniak : 0,2 bis 8,0 Mol/l
Wasser : 1 bis 21 Mol/l

4. Verfahren nach Anspruch 1, dadurch gekennzeichnet, daß die $SiO_2$-Partikel zur Dichtsinterung, also zur Entfernung von Mikroporen, auf eine Temperatur im Bereich von 600 bis 800 °C in einer inerten Atmosphäre erhitzt werden.

5. Verfahren nach Anspruch 4, dadurch gekennzeichnet, daß die $SiO_2$-Partikel im Vakuum erhitzt werden.

6. Verfahren nach Anspruch 4, dadurch gekennzeichnet, daß die $SiO_2$-Partikel unter Schutzgasatmosphäre, vorzugsweise Heliumatmosphäre, erhitzt werden.

7. Verfahren nach einem der vorhergehenden Ansprüche, dadurch gekennzeichnet, daß als Reinigungsgas für die zweite Prozeßstufe ein strömendes Gasgemisch aus $O_2$ mit einem Zusatz von 0,1 bis 20 Vol.% $Cl_2$ eingesetzt wird.

8. Verfahren nach den Ansprüchen 1 und 2, dadurch gekennzeichnet, daß die $SiO_2$-Partikel nach ihrer Synthese dem Erhitzungsprozeß unterzogen werden und die dichtgesinterten $SiO_2$-Partikel dann zu einem offenporigen Grünkörper verformt werden.

9. Verfahren nach den Ansprüchen 1 und 2, dadurch gekennzeichnet, daß aus den $SiO_2$-Partikeln ein Grünkörper geformt und dieser Grünkörper dem Erhitzungsschritt zur Dichtsinterung der einzelnen $SiO_2$-Partikel unterzogen wird.

10. Verfahren nach einem der vorhergehenden Ansprüche, dadurch gekennzeichnet, daß der Reinigungsprozeß für den Grünkörper bei einer Temperatur von etwa 900 °C über eine Dauer von 2 h in einem strömenden Gasgemisch aus $10^{-3}$ m³/min $O_2$ und $6.10^{-5}$ m³/min $Cl_2$ durchgeführt wird.

11. Verfahren nach den Ansprüchen 2 und 4, dadurch gekennzeichnet, daß monodisperse $SiO_2$-Partikel mit einem mittleren Teilchendurchmesser von jeweils 0,08 bis 0,9 μm mit einer Standardabweichung s = 0,04 bis 0,1 hergestellt werden.

12. Verfahren nach mindestens einem der Ansprüche 1 bis 11, dadurch gekennzeichnet, daß die hergestellten Glaskörper weiter als Vorform für optische Wellenleiter verwendet werden.

13. Verfahren nach mindestens einem der Ansprüche 1 bis 11, dadurch gekennzeichnet, daß die hergestellten Glaskörper weiter für Lampenkolben, insbesondere von Halogen- oder Gasentladungslampen, verwendet werden.

## Claims

1. A method of manufacturing glass bodies, in which the starting material for the glass body, being monodispersed $SiO_2$ particles (quartz-glass powder) is used to form an openpore green body which is subjected to a purification process in which the impurities present in the green body react with a purifying gas which is heated to a temperature in the range from 600 to 900 °C, after which the green body is sintered, characterized by a two-stage heating-purification step in which in the first stage the $SiO_2$ particles are heated until they are dense-sintered, i. e. they have no more micropores, and in the second stage the open-pore green body formed from the dense-sintered $SiO_2$ particles is purified in a known manner in the purification gaseous atmosphere and subsequently sintered.

2. A method as claimed in Claim 1, characterized in that monodispersed $SiO_2$ particles are manufactured by an ammoniacalic hydrolysis of alkoxysilanes in an alcoholic solution.

3. A method as claimed in Claim 2, characterized in that the concentrations in the solution used for a synthesis of the $SiO_2$ particles are as follows :

    Alkoxysilane : 0.01 to 0.6 Mol/l
    Ammonia : 0.2 to 8.0 Mol/l
    Water : 1 to 21 Mol/l

4. A method as claimed in Claim 1, characterized in that for dense-sintering the $SiO_2$ particles, i. e. for removing micropores, the said particles are heated to a temperature in the range from 600 to 800 °C in an inert atmosphere.

5. A method as claimed in Claim 4, characterized in that the $SiO_2$ particles are heated in a vacuum.

6. A method as claimed in Claim 4, characterized in that the $SiO_2$ particles are heated in a protective atmosphere, preferably, a helium atmosphere.

7. A method as claimed in any one of the preceding Claims, characterized in that for the second process step a flowing gas mixture of $O_2$ to which from 0.1 to 20 % by volume of $Cl_2$ is added is used as a purification gas.

8. A method as claimed in Claim 1 and 2, characterized in that after their synthesis the $SiO_2$ particles are subjected to a heating process after which the dense-sintered $SiO_2$ particles are deformed into an open-pore green body.

9. A method as claimed in Claims 1 and 2, characterized in that a green body is formed from the $SiO_2$ particles, which is subjected to a heating step for dense-sintering the individual $SiO_2$ particles.

10. A method as claimed in any one of the preceding Claims, characterized in that the process for purifying the green body is carried out at a temperature of about 900 °C for 2 hours in a flowing gas mixture of $10^{-3}$ m³/min of $O_2$ and $6.10^{-5}$ m³/min of $Cl_2$.

11. A method as claimed in Claims 2 and 4, characterized in that monodispersed $SiO_2$ Particles are manufactured having an average particle diameter of from 0.08 to 0.9 μm and a standard deviation s of from 0.04 to 0.1.

12. A method as claimed in at least one of the Claims 1 to 11, characterized in that the glass bodies manufactured are further used as preforms for optical waveguides.

13. A method as claimed in at least one of the Claims 1 to 11, characterized in that the glass bodies manufactured are further used for lamp envelopes of, in particular, halogen lamps or gas-discharge lamps.

## Revendications

1. Procédé pour la préparation de corps en verre, selon lequel un semi-produit aux pores ouverts est formé à partir du matériau de départ pour les corps en verre sous forme de particules monodispersées en $SiO_2$ (poudre de verre de quartz), ce semi-produit est soumis à un procédé de nettoyage dans un gaz de nettoyage chauffé à une température comprise entre 600 et 900 °C avec les impuretés présentes dans le semi-produit et ensuite fritté, caractérisé en ce qu'on applique une étape de nettoyage par chauffage à deux pas de façon qu'au premier pas les particules de $SiO_2$ sont chauffées jusqu'à ce qu'elles soient frittées dense, donc qu'elles ne présentent plus de micro-pores et qu'au second pas, le semi-produit aux pores ouverts formés à partir des particules de $SiO_2$ frittées dense est nettoyé de façon connue dans l'atmosphère de gaz de nettoyage et ensuite fritté.

2. Procédé selon la revendication 1, caractérisé en ce que les particules monodispersées de $SiO_2$ sont réalisées par hydrolyse ammoniacale d'alkoxysilane dans une solution alcoolique.

3. Procédé selon la revendication 2, caractérisé en ce que les concentrations dans la solution utilisée pour la synthèse de particules de $SiO_2$ sont comme suit :

    alkoxysilane : 0,01 à 0,6 mole/l
    ammoniac : 0,2 à 8,0 mole/l
    eau : 1 à 21 mole/l

4. Procédé selon la revendication 1, caractérisé en ce que pour le frittage dense, donc pour la suppression des micropores, les particules de $SiO_2$ sont chauffées à une température située dans la gamme comprise entre 600 et 800 °C dans une atmosphère inerte.

5. Procédé selon la revendication 4, caractérisé en ce que les particules de $SiO_2$ sont chauffées sous vide.

6. Procédé selon la revendication 4, caractérisé en ce que les particules de $SiO_2$ sont chauffées dans l'atmosphère d'un gaz, protecteur, de préférence une atmosphère d'hélium.

7. Procédé selon l'une des revendications précédentes, caractérisé en ce que comme gaz de nettoyage pour le deuxième pas du processus, on utilise un mélange gazeux en circulation constitué

par O$_2$ et 0,1 à 20 % en volume de Cl$_2$.

8. Procédé selon les revendications 1 et 2, caractérisé en ce qu'après leur synthèse, les particules de SiO$_2$ sont soumises à un chauffage et les particules de SiO$_2$ frittées dense sont ensuite déformées en semi-produits aux pores ouverts.

9. Procédé selon les revendications 1 et 2, caractérisé en ce qu'un semi-produit est formé à partir de particules de SiO$_2$ et ce semi-produit est soumis à une étape de chauffage pour le frittage dense des particules de SiO$_2$ séparées.

10. Procédé selon l'une des revendications précédentes, caractérisé en ce que le procédé de nettoyage pour les semi-produits s'effectue à une température d'environ 900 °C pendant une durée de 2 heures dans un mélange gazeux en circulation constitué par 10$^{-3}$ m$^3$/min de O$_2$ et 6.10$^{-5}$ m$^3$/min de Cl$_2$.

11. Procédé selon les revendications 2 et 4, caractérisé par la préparation de particules monodispersées de SiO$_2$ présentant un diamètre moyen de particules de 0,08 à 0,9 $\mu$m et un écart standard s = 0,04 à 0,1.

12. Procédé selon au moins l'une des revendications 1 à 11, caractérisé en ce que les corps en verre réalisés sont utilisés comme préformes pour des guides d'ondes optiques.

13. Procédé selon au moins l'une des revendications 1 à 11, caractérisé en ce que les corps en verre réalisés sont utilisés pour des ampoules de lampe, notamment des lampes à décharge dans le gaz ou à l'halogène.